# EUROPEAN PATENT APPLICATION

(11) **EP 4 726 901 A1**
(43) Date of publication of application: **15.04.2026**
(21) Application number: 25208070.0
(22) Date of filing: 10.10.2025
(51) Int. Cl.: H01M 50/449, H01M 50/446, H01M 50/414, H01M 50/426, H01M 50/443, H01M 10/0525, H01M 50/434, H01M 10/056, H01M 50/457, H01M 50/497, H01M 50/403, H01M 50/451

(54) **COMPOSITE ELECTROLYTE MEMBRANE AND ELECTROCHEMICAL DEVICE INCLUDING THE SAME**

(30) Priority: 14.10.2024 KR 20240139130
(71) Applicant: SK On Co., Ltd., Seoul 03161 (KR)
(72) Inventor: HAN, Ju Sung, 34124 Daejeon (KR); KIM, Gun Young, 34124 Daejeon (KR); PARK, Doe Hee, 34124 Daejeon (KR); PARK, Myung Soo, 34124 Daejeon (KR); PARK, Seong Jin, 34124 Daejeon (KR); KIM, Byung Hyuk, 34124 Daejeon (KR)
(74) Representative: Prüfer & Partner mbB Patentanwälte · Rechtsanwälte

(57) **Abstract**

Provided is a composite electrolyte membrane comprising a porous support including a polymer having a melting point of at least 145°C and a coating layer on at least one side of the support, wherein the coating layer includes a polymer binder and hydrophilic oxide particles. The membrane exhibits high heat resistance and improved ionic conductivity, and is suitable for use in electrochemical devices, such as lithium secondary batteries. Experimental results demonstrate excellent capacity retention, stability, and performance compared to conventional polyolefin-based separators, making the membrane advantageous for high-capacity and high-safety battery applications.

## Description

### TECHNICAL FIELD

The following disclosure relates to a composite electrolyte membrane and an electrochemical device including the same.

### BACKGROUND

A secondary battery is used as a core power source of portable electronic communication devices such as mobile phones and laptops. Since the secondary battery shows a high storage capacity, excellent charge/discharge characteristics, high processability, and the like, as compared with other energy storages such as a capacitor and a fuel cell, it is attracting a lot of attention as a next-generation energy storage device such as a wearable device, an electric vehicle, and an energy storage system (ESS).

Though a conventional separator of a lithium secondary battery uses a polyolefin-based polymer and a liquid electrolyte, when it is exposed to a high temperature, there are risks of fire and explosion due to the shrinkage of the separator and the ignition of the electrolyte by the low heat resistance properties of the polyolefin-based polymer. Thus, a next-generation lithium secondary battery of high performance is being developed by developing/applying various types of new materials for the purpose of improvement of external effects such as high temperature/low temperature properties, safety, durability, and performance reliability as well as electrochemical performance such as high capacity, high output, and long lifespan.

### SUMMARY

An embodiment of the present disclosure is directed to providing a composite electrolyte membrane having high heat resistance properties and ion conductivity, and an electrochemical device including the same.

Another embodiment of the present disclosure is directed to providing a method for manufacturing the composite electrolyte membrane.

In one general aspect, a composite electrolyte membrane includes: a porous support including a polymer having a melting point of 145°C or higher, and a coating layer on at least one side of the porous support, wherein the coating layer includes a lithium salt, a polymer binder, and hydrophilic oxide particles.

In an exemplary embodiment, the porous support may include a polymer selected from the group consisting of a fluorine-based polymer, a sulfone-based polymer, a hydrocarbon-based polymer, polyimide (PI), polyethylene terephthalate (PET), polybenzimidazole (PBI), aramid, and copolymers thereof, as the polymer having a melting point of 145°C or higher. Specifically, the porous support may include a polymer selected from the group consisting of polytetrafluoroethylene (PTFE), polyvinylidene fluoride (PVDF), polyvinylidene fluoride-co-hexafluoropropylene (PVDF-HFP), polysulfone (PS), polyimide (PI), polyethylene terephthalate (PET), polybenzimidazole (PBI), and copolymers thereof.

In an exemplary embodiment, the hydrophilic oxide particles may be inorganic oxide particles including any one or more hydrophilic groups selected from the group consisting of -OH, - C(=O), -COO, and -CONH. Specifically, the hydrophilic oxide particles may include boehmite or may include TiO₂, SnO₂, CaO, ZnO, ZrO₂, CeO₂, NiO, MgO, SiO₂, BaTiO₃, HfO₂, SrTiO₃, Y₂O₃, or Al₂O₃ including one or more hydrophilic groups selected from the group consisting of -OH, -C(=O), -COO, and -CONH on the surface.

In an exemplary embodiment, the polymer binder may include any one or more selected from the group consisting of a fluorine-based polymer, a sulfone-based polymer, a hydrocarbon-based polymer, a urethane-based polymer, an ester-based polymer, an epoxy-based polymer, an amide-based polymer, an imide-based polymer, an acryl-based polymer, an acrylamide-based polymer, a vinyl alcohol-based polymer, an aramid-based polymer, a vinylpyrrolidone-based polymer, and synthetic rubber. Specifically, the polymer binder may include a polymer selected from the group consisting of polyethylene oxide (PEO), polyurethane (PU), polyacrylonitrile (PAN), polymethylmethacrylate (PMMA), styrene-butadiene rubber (SBR), polyvinylidene fluoride (PVDF), polyvinylidene fluoride-co-hexafluoropropylene (PVDF-co-HFP), and copolymers thereof.

In an exemplary embodiment, both the porous support and the polymer binder may include the fluorine-based polymer.

In an exemplary embodiment, a weight ratio between the polymer binder and the hydrophilic oxide particles may be 1:99 to 99:1.

In an exemplary embodiment, the coating layer may further include a plasticizer.

In an exemplary embodiment, the coating layer may be applied on the porous support, or applied on the porous support and impregnated into the pores of the porous support.

In an exemplary embodiment, the porous support may have a porosity of 30% to 90%.

In an exemplary embodiment, the coating layer may have a thickness of 1 µm to 20 µm.

In an exemplary embodiment, the porous support may have a thickness of 1 µm to 50 µm.

In another general aspect, a method for manufacturing a composite electrolyte membrane includes a coating process of coating at least one side of a porous support including a polymer having a melting point of 145°C or higher with a slurry including a lithium salt, a polymer binder, and hydrophilic oxide particles.

In an exemplary embodiment, before the coating process, an impregnation process of impregnating the porous support with the slurry may be further included.

In still another general aspect, an electrochemical device includes: a positive electrode, a negative electrode, and the composite electrolyte membrane according to the implementation example.

In an exemplary embodiment, the electrochemical device may further include a liquid electrolyte or a gel polymer electrolyte.

In an exemplary embodiment, the electrochemical device may be a lithium secondary battery.

Other features and aspects will be apparent from the following detailed description, the drawings, and the claims.

### BRIEF DESCRIPTION OF THE DRAWINGS

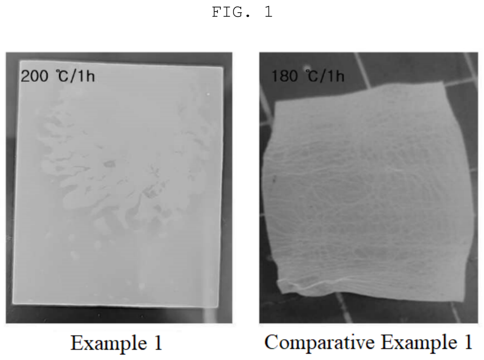

FIG. 1 is drawings showing the results of placing membranes in a high temperature oven, taking them out of the oven after 1 hour, and confirming whether they shrank in photographs, in order to evaluate high temperature shrinkage rates of the membranes of Example 1 and Comparative Example 1.

### DETAILED DESCRIPTION OF EMBODIMENTS

Since the embodiments described in the present specification may be modified in many different forms, the technology according to an exemplary embodiment is not limited to the embodiments set forth herein. Furthermore, throughout the specification, unless otherwise particularly stated, the word "comprising", "including", "containing", "being provided with", or "having" does not mean the exclusion of any other constituent element, but rather means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Unless otherwise defined in the present specification, when it is said that a part such as a layer, a film, a thin film, a region, or a plate is "on" or "above" the other part, the part may be "directly on" the other part, and also, another part may intervene therebetween.

Hereinafter, unless otherwise particularly defined in the present specification, "about" may be considered as a value within 30%, 25%, 20%, 15%, 10%, 5%, 3%, 2%, 1%, or 0.5% of a stated value.

An implementation example provides a composite electrolyte membrane which may implement excellent high temperature stability and ion conductivity, by applying a high heat resistance porous support and hydrophilic oxide particles to an organic/inorganic composite electrolyte membrane. Specifically, the composite electrolyte membrane according to an implementation example includes: a porous support including a polymer having a melting point of 145°C or higher, and a coating layer on at least one side of the porous support, wherein the coating layer includes a lithium salt, a polymer binder, and hydrophilic oxide particles.

The polymer included in the porous support according to an exemplary embodiment is a polymer having a melting point of 145°C or higher, 150°C or higher, 180°C or higher, 200°C or higher, 230°C or higher, 250°C or higher, or 300°C or higher, and any polymer may be applied without limitation as long as it has high heat resistance, and though the upper limit of the melting point is not particularly limited, it may be 500°C, 450°C, 400°C, 350°C, 300°C, 250°C, 200°C, or 180°C. The polymer having a melting point of 145°C or higher included in the porous support is, for example, a fluorine-based polymer and may include a fluorine atom-containing polymer including a "-CF₂-" structure in a repeating unit, sulfone-based polymer, a hydrocarbon-based polymer, polyimide (PI), polyethylene terephthalate (PET), polybenzimidazole (PBI), and/or aramid (trade name: Kevlar^{®}). Specifically, the porous support may include one or more polymers selected from the group consisting of polytetrafluoroethylene (PTFE), polyvinylidene fluoride (PVDF), polyvinylidene fluoride-co-hexafluoropropylene (PVDF-HFP), polysulfone (PS), polyimide (PI), polyethylene terephthalate (PET), polybenzimidazole (PBI), aramid, and copolymers thereof, and more specifically, the porous support may include polytetrafluoroethylene (PTFE).

The hydrophilic oxide particles according to an exemplary embodiment may be inorganic oxide particles including any one or more hydrophilic groups selected from the group consisting of - OH, -C(=O), -COO, and -CONH. More specifically, the hydrophilic oxide particles may include boehmite (AlOOH) and/or the hydrophilic oxide particles may include TiO₂, SnO₂, CaO, ZnO, ZrO₂, CeO₂, NiO, MgO, SiO₂, BaTiO₃, HfO₂, SrTiO₃, Y₂O₃, and/or Al₂O₃ including one or more hydrophilic groups selected from the group consisting of -OH, -C(=O), -COO, and -CONH on the surface. The oxide including a hydrophilic group on the surface may have a hydrophilic group introduced to the surface of the oxide by a chemical reaction. Specifically, for example, the hydrophilic oxide particles may be boehmite. The composite electrolyte membrane according to an exemplary embodiment may have increased compatibility with a liquid or gel polymer electrolyte by including the hydrophilic oxide particles, and thus, may improve ion conductivity.

In an exemplary embodiment, though not particularly limited, the hydrophilic oxide particles may have an average particle diameter of, for example, 50 nm to 1 µm, 100 nm to 900 nm, 200 nm to 800 nm, or 300 nm to 600 nm.

The polymer binder according to an exemplary embodiment may be a known binder, and may include, for example, any one or more selected from the group consisting of a fluorine-based polymer, a sulfone-based polymer, a hydrocarbon-based polymer, a urethane-based polymer, an ester-based polymer, an epoxy-based polymer, an amide-based polymer, an imide-based polymer, an acryl-based polymer, an acrylamide-based polymer, a vinyl alcohol-based polymer, an aramid-based polymer, a vinylpyrrolidone-based polymer, and synthetic rubber. Specifically, for example, the polymer binder may include a polymer selected from the group consisting of polyethylene oxide (PEO), polyurethane (PU), polyacrylonitrile (PAN), polymethylmethacrylate (PMMA), styrene-butadiene rubber (SBR), polyvinylidene fluoride (PVDF), polyvinylidene fluoride-co-hexafluoropropylene (PVDF-co-HFP), and copolymers thereof, and more specifically, may be polyvinylidene fluoride-co-hexafluoropropylene (PVDF-co-HFP). In an exemplary embodiment, the melting point of the polymer binder included in the coating layer is not particularly limited, but, for example, may be 80°C to 500°C, 100°C to 400°C, 100°C to 350°C, 100°C to 300°C, or 100°C to 200°C.

In an exemplary embodiment, the porous support and the polymer binder may include a polymer having similar structure, atomic composition, or properties. For example, the porous support and the polymer binder may both include a fluorine-based polymer, may both a hydrocarbon-based polymer, or may both a sulfone-based polymer. Specifically, for example, the porous support may include polytetrafluoroethylene (PTFE), and the polymer binder may include polyvinylidene fluoride-co-hexafluoropropylene (PVDF-co-HFP).

The polymer included in the porous support and/or the polymer binder according to an exemplary embodiment may have a weight average molecular weight of, for example, 10,000 g/mol to 300,000 g/mol, 10,000 g/mol to 200,000 g/mol, or 50,000 g/mol to 150,000 g/mol.

A weight ratio between the polymer binder and the hydrophilic oxide particles included in the coating layer according to an exemplary embodiment may be 1:99 to 99:1, 5:95 to 95:5, 10:90 to 90:10, 10:90 to 70:30, 10:90 to 60:40, 10:90 to 50:50, or 20:80 to 50:50, but is not necessarily limited thereto. As confirmed from the above exemplary embodiment, a pouch cell to which the composite separator including the polymer binder and the hydrophilic oxide particles at the above weight ratio is applied may implement significantly improved heat resistance, while showing a capacity and battery properties equivalent to those of a pouch cell including a commercially available separator.

The coating layer according to an exemplary embodiment may be applied on the porous support, or applied on the porous support and impregnated into the pores of the porous support. In an exemplary embodiment, the coating layer may be formed by the porous support with a slurry including the lithium salt, the polymer binder, and the hydrophilic oxide particles, and in a coating process, the slurry may penetrate into the pores of the porous support. Otherwise, the composite electrolyte membrane according to an exemplary embodiment is manufactured by impregnating the porous support with the slurry to penetrate the slurry into the pores of the support, and then applying the slurry on the support to form the coating layer, thereby including the lithium salt, the polymer binder, and the hydrophilic oxide in the pores of the porous support and on the porous support.

In an exemplary embodiment, the coating layer may be formed on any one surface of the porous support or formed on both surfaces.

The coating layer according to an exemplary embodiment may include cyclic carbonate and/or linear carbonate. The cyclic carbonate may be selected from the group consisting of ethylene carbonate, propylene carbonate, butylene carbonate, vinylene carbonate, vinyl ethylene carbonate, fluoroethylene carbonate, and mixtures thereof, and the linear carbonate may be selected from the group consisting of dimethyl carbonate, diethyl carbonate, dipropyl carbonate, ethyl methyl carbonate, methyl propyl carbonate, methyl isopropyl carbonate, ethyl propyl carbonate, and mixtures thereof.

The lithium salt according to an exemplary embodiment may include one or two or more selected from the group consisting of LiPF₆, LiBF₄, LiClO₄, LiSbF₆, LiAsF₆, LiN(SO₂C₂F₅)₂, LiN(CF₃SO₂)₂, LiN(SO₃C₂F₅)₂, LiN(SO₂F)₂, LiCF₃SO₃, LiC₄F₉SO₃, LiC₆H₅SO₃, LiSCN, LiAlO₂, LiAlCl₄, LiN(CₓF₂ₓ₊₁SO₂)(C_{y}F_{2y+1}SO₂) (wherein x and y are natural numbers), LiCl, LiI, and LiB(C₂O₄)₂.

In an exemplary embodiment, the coating layer may further include a plasticizer. The plasticizer may include, for example, any one or more selected from the group consisting of ethylene carbonate (EC), polyethylene glycol (PEG), succinonitrile (SN), sulfolane, and cyclic phosphate (CP), but is not necessarily limited thereto. The plasticizer may be included at 1 wt% to 50 wt%, 10 wt% to 50 wt%, 10 wt% to 40 wt%, 10 wt% to 30 wt%, 20 wt% to 30 wt%, or about 22 wt%, with respect to the total weight of the lithium salt, the polymer binder, the hydrophilic oxide particles, and the plasticizer.

In an exemplary embodiment, when the coating layer further includes the plasticizer, the polymer binder may be included at 10 wt% to 70 wt%, 10 wt% to 50 wt%, 20 wt% to 50 wt%, 30 wt% to 40 wt%, or about 34 wt%, with respect to the total weight of the lithium salt, the polymer binder, the hydrophilic oxide particles, and the plasticizer. Otherwise, the lithium salt may be included at 1 wt% to 50 wt%, 1 wt% to 30 wt%, 5 wt% to 30 wt%, 5 wt% to 20 wt%, 5 wt% to 15 wt%, or about 10 wt%, with respect to the total weight of the lithium salt, the polymer binder, the hydrophilic oxide particles, and the plasticizer. Otherwise, the hydrophilic oxide particles may be included at 10 wt% to 70 wt%, 10 wt% to 50 wt%, 20 wt% to 50 wt%, 30 wt% to 40 wt%, or about 34 wt%, with respect to the total weight of the lithium salt, the polymer binder, the hydrophilic oxide particles, and the plasticizer.

In an exemplary embodiment, the porous support may have a porosity of about 30% to about 90%, about 40% to about 80%, or about 50% to about 70%, but is not necessarily limited thereto. In an exemplary embodiment, the porous support may have a pore size of about 0.01 µm to about 1.0 µm, about 0.05 µm to about 1.0 µm, about 0.1 µm to about 1.0 µm, or about 0.3 µm to about 0.8 µm, but is not necessarily limited thereto.

In an exemplary embodiment, the porous support may have a mechanical strength of about 20 MPa to about 200 MPa, about 50 MPa to about 200 MPa, about 100 MPa to about 200 MPa, or about 150 MPa to about 200 MPa, but is not necessarily limited thereto. In an exemplary embodiment, the elongation of the porous support may be about 40% to about 300%, about 100% to about 300%, or about 200% to about 300%, but is not necessarily limited thereto. The mechanical strength and the elongation are values measured in accordance with ASTM D638 (specimen width: 0.3 cm, speed: 1 mm/s, Z=20 mm).

In an exemplary embodiment, the coating layer may have a thickness of about 1 µm to about 20 µm, about 1 µm to about 15 µm, about 5 µm to about 15 µm, or about 5 µm to about 10 µm, but is not necessarily limited thereto.

In an exemplary embodiment, the porous support may have a thickness of about 1 µm to about 50 µm, about 1 µm to about 30 µm, about 5 µm to about 30 µm, about 5 µm to about 20 µm, about 5 µm to about 15 µm, or about 5 µm to about 10 µm, but is not necessarily limited thereto.

Another implementation example provides a method for manufacturing a composite electrolyte membrane including a coating process of coating at least one side of a porous support including a polymer having a melting point of 145°C or higher with a slurry including a lithium salt, a polymer binder, and hydrophilic oxide particles.

Since the description of the composite electrolyte membrane may be applied identically to the method for manufacturing a composite electrolyte membrane, redundant description will be omitted.

The manufacturing method according to an exemplary embodiment may further include impregnating the porous support with the slurry, before the coating process. The slurry including the lithium salt, the polymer binder, and the hydrophilic oxide particles may penetrate into the pores of the porous support, by including the impregnation process.

In an exemplary embodiment, the slurry may include an organic solvent or include a nonaqueous solvent.

Another implementation example provides an electrochemical device including: a positive electrode, a negative electrode, and the composite electrolyte membrane according to the implementation example.

In an exemplary embodiment, the electrochemical device may further include a liquid electrolyte or a gel polymer electrolyte.

In an exemplary embodiment, the electrochemical device may be a lithium secondary battery, a sodium secondary battery, a potassium secondary battery, or a calcium secondary battery.

Another implementation example provides a method for manufacturing the electrochemical device according to an exemplary embodiment. In an exemplary embodiment, the method for manufacturing an electrochemical device may include stacking a positive electrode, a composite electrolyte membrane, and a negative electrode. Specifically, the method may include: stacking a positive electrode, a composite electrolyte membrane, and a negative electrode to manufacture a jelly roll, placing the jelly roll in a pouch, and then injecting a liquid electrolyte and/or a gel electrolyte to manufacture a pouch cell. In an exemplary embodiment, when the injecting of an electrolyte is included, heat treating at a temperature of about 50°C to about 100°C or about 50°C to about 80°C for about 40 minutes to about 80 minutes or for about 60 minutes may be further included.

Hereinafter, the electrochemical device according to an exemplary embodiment will be described.

### [Positive electrode]

A positive electrode may include a positive electrode current collector and a positive electrode mixture layer placed on at least one surface of the positive electrode current collector.

### (Positive electrode current collector)

The positive electrode current collector may include stainless steel, nickel, aluminum, titanium, or an alloy thereof. The positive electrode current collector may also include aluminum or stainless steel which is surface-treated with silver, carbon, nickel, or titanium. Though not limited, the positive electrode current collector may be, for example, 10 µm to 50 µm.

### (Positive electrode material)

A positive electrode mixture layer may include a positive electrode active material. The positive electrode active material may include a compound which may reversibly intercalate and deintercalate lithium ions.

According to exemplary embodiments, the positive electrode active material may include a lithium-nickel metal oxide. The lithium-nickel metal oxide may further include at least one of cobalt (Co), manganese (Mn), and aluminum (Al).

In some exemplary embodiments, the positive electrode active material or the lithium-nickel metal oxide may include a layered structure or a crystal structure represented by the following Chemical Formula 1:

[Chemical Formula 1] LiₓNiₐM_{b}O_{2+z}

wherein 0.9≤x≤1.2, 0.6≤a≤0.99, 0.01≤b≤0.4, and -0.5≤z≤0.1.

As described above, M may include Co, Mn, and/or Al.

The chemical structure represented by Chemical Formula 1 shows a bonding relationship included in the layered structure or the crystal structure of the positive electrode active material, and it does not mean that other additional elements are excluded. For example, M includes Co and/or Mn, and Co and/or Mn may be provided as a main active element of the positive electrode active material with Ni. Chemical Formula 1 is provided for expressing the bonding relationship of the main active elements and should be understood as a formula covering introduction of an additional element and substitution.

In an exemplary embodiment, auxiliary elements which are added to the main active elements to enhance chemical stability of the positive electrode active material, or the layered structure/crystal structure may be further included. The auxiliary element may be incorporated into the layered structure/crystal structure and form a bond, and in this case also, should be understood to be included in the range of the chemical structure represented by Chemical Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the positive electrode active material with Co or Mn, like Al.

For example, the positive electrode active material or the lithium-nickel metal oxide may include a layered structure or a crystal structure represented by the following Chemical Formula 1-1:

[Chemical Formula 1-1] LiₓNiₐM1_{b1}M2_{b2}O_{2+z}

wherein M1 may include Co, Mn, and/or Al, M2 may include the auxiliary elements described above, and 0.9≤x≤1.2, 0.6≤a≤0.99, 0.01≤b1+b2≤0.4, and -0.5≤z≤0.1.

The positive electrode active material may further include a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or the doping element may be present on the surface of the lithium-nickel metal oxide particles or may penetrate through the surface of the lithium-nickel metal composite oxide particles and be included in the combined structure represented by Chemical Formula 1 or Chemical Formula 1-1.

The positive electrode active material may include a nickel-cobalt-manganese (NCM)-based lithium oxide. In this case, an NCM-based lithium oxide having an increased nickel content may be used.

Ni may be provided as a transition metal related to the output and capacity of a lithium secondary battery. Therefore, as described above, since a high-content (high-Ni) composition is adopted into the positive electrode active material, a high-capacity positive electrode and a high-capacity lithium secondary battery may be provided.

However, as the content of Ni increases, the long-term preservation stability and the life stability of the positive electrode or the secondary battery may be relatively reduced, and a side reaction with an electrolyte may be increased. However, according to exemplary embodiments, the life stability and the capacity retention properties may be improved by Mn while maintaining the electrical conductivity by including Co.

The content of Ni in the NCM-based lithium oxide (for example, the mole fraction of nickel of the total moles of nickel, cobalt, and manganese) may be 0.6 or more, 0.7 or more, or 0.8 or more. In some exemplary embodiments, the content of Ni may be 0.8 to 0.95, 0.82 to 0.95, 0.83 to 0.95, 0.84 to 0.95, 0.85 to 0.95, or 0.88 to 0.95.

In some exemplary embodiments, the positive electrode active material may include a lithium cobalt oxide-based active material, a lithium manganese oxide-based active material, a lithium nickel oxide-based active material, or a lithium iron phosphate (LFP)-based active material (for example, LiFePO₄).

In some exemplary embodiments, the positive electrode active material may include a Mn-rich-based active material having a chemical structure or crystal structure represented by Chemical Formula 2, a Li rich layered oxide (LLO)/over lithiated oxide (OLO)-based active material, or a Co-less-based active material:

[Chemical Formula 2] p[Li₂MnO₃]·(1-p)[Li_{q}JO₂]

wherein 0<p<1 and 0.9≤q≤1.2, and J may include at least one element of Mn, Ni, Co, Fe, Cr, V, Cu, Zn, Ti, Al, Mg, and B.

### (Method for manufacturing positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, but is not limited thereto. The positive electrode mixture layer may further include a binder, and may optionally further include a conductive material, a thickener, and the like. Herein, the binder and the conductive material may be as described above.

### (Positive electrode solvent)

A non-limiting example of the solvent used in the preparation of the positive electrode mixture may include N-methyl-2-pyrrolidone (NMP), dimethyl formamide, dimethyl acetamide, N,N-dimethylaminopropylamine, ethylene oxide, tetrahydrofuran, isobutyl isobutyrate, butyl butyrate, xylene, anisole, and the like.

### (Positive electrode binder)

The binder may include a non-water-based binder and/or a water-based binder, or rubber-based binder and/or fluorine-based binder, and for example, may include polyvinylidene fluoride (PVDF), poly(vinylidene fluoride-co-hexafluoropropylene (PVDF-HFP), polyacrylonitrile, polymethyl methacrylate, acrylonitrile butadiene rubber (NBR), polybutadiene rubber (BR), styrene-butadiene rubber (SBR), and the like. In an exemplary embodiment, a PVDF-based binder may be used as a positive electrode binder.

### (Positive electrode conductive material)

The conductive material may be added for increasing conductivity of the positive electrode mixture layer and/or mobility of lithium ions or electrons. For example, the conductive material may be a linear conductive material and/or a dot-shaped conductive material, and for example, may include carbon-based conductive materials such as graphite, carbon black, acetylene black, ketjen black, graphene, carbon nanotubes, vapor-grown carbon fiber (VGCF), carbon fiber, and carbon nanofiber, and/or metal-based conductive materials including tin, tin oxide, titanium oxide, perovskite materials such as LaSrCoO₃ and LaSrMnO₃, and the like, but is not limited thereto.

### (Positive electrode thickener/ dispersant)

If necessary, the positive electrode mixture may further include a thickener and/or a dispersant and the like. As an exemplary embodiment, the positive electrode mixture may include a thickener such as carboxymethyl cellulose (CMC).

### [Negative electrode]

The negative electrode may include a negative electrode current collector and a negative electrode mixture layer placed on at least one surface of the negative electrode current collector.

### (Negative electrode current collector)

A non-limiting example of the negative electrode current collector may include a copper foil, a nickel foil, a stainless-steel foil, a titanium foil, a nickel foam, a copper foam, a polymer substrate coated with a conductive metal, and the like. Though not limited thereto, the negative electrode current collector may be, for example, 10 to 50 µm.

### (Negative electrode material)

The negative electrode mixture layer may include a negative electrode active material. As the negative electrode active material, a material capable of adsorbing or desorbing lithium ions may be used. For example, the negative electrode active material may be a carbonaceous material such as crystalline carbon, amorphous carbon, carbon composite, and carbon fiber; lithium metal; lithium alloy; a silicon (Si)-containing material, a tin (Sn)-containing material, or the like.

An example of the amorphous carbon may include hard carbon, soft carbon, coke, mesocarbon microbead (MCMB), mesophase pitch-based carbon fiber (MPCF), and the like.

An example of the crystalline carbon may include graphite-based carbon such as natural graphite, artificial graphite, graphitized coke, graphitized MCMB, and graphitized MPCF.

The lithium metal may include a pure lithium metal or a lithium metal on which a protective layer for suppressing dendrite growth and the like is formed. In an exemplary embodiment, a lithium metal-containing layer which is deposited or coated on a negative electrode current collector may be used as a negative electrode active material layer. In an exemplary embodiment, a lithium thin film layer may be used as a negative electrode active material layer.

An element included in the lithium alloy may include aluminum, zinc, bismuth, cadmium, antimony, silicon, lead, tin, gallium, indium, or the like.

The silicon-containing material may provide more increased capacity characteristics. The silicon-containing material may include Si, SiOₓ (0<x<2), metal-doped SiOₓ (0<x<2), a silicon-carbon composite, and the like. The metal may include lithium and/or magnesium, and the metal-doped SiOₓ (0<x<2) may include metal silicate.

### (Method for manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, but is not limited thereto. The negative electrode mixture layer may further include a binder, and may optionally further include a conductive material, a thickener, and the like.

In some exemplary embodiments, the negative electrode may include a negative electrode active material layer in a lithium metal form formed by a deposition/coating process.

### (Negative electrode solvent)

A non-limiting example of the solvent for a negative electrode mixture may include water, pure water, deionized water, distilled water, ethanol, isopropanol, methanol, acetone, n-propanol, t-butanol, isobutyl isobutyrate, butyl butyrate, xylene, anisole, and the like.

### (Negative electrode binder/ conductive material/ thickener)

As the binder, the conductive material, and the thickener, the materials described above, which may be used in the manufacture of a positive electrode, may be used.

In some exemplary embodiments, rubber-based binder such as a styrene-butadiene rubber (SBR)-based binder, carboxymethyl cellulose (CMC), a polyacrylic acid-based binder, a poly(3,4-ethylenedioxythiophene) (PEDOT)-based binder, and the like may be used as a negative electrode binder.

### [Electrode assembly]

According to exemplary embodiments, the positive electrode, the negative electrode, and the separator may be repeatedly disposed to form an electrode assembly. In some exemplary embodiments, the electrode assembly may be a winding type, a stacking type, a zigzag (z)-folding type, or a stack-folding type.

### [Electrolyte]

A lithium secondary battery may be defined by housing the electrode assembly in a case with an electrolyte. According to exemplary embodiments, a nonaqueous electrolytic solution may be used as the electrolyte.

### (Lithium salt/ organic solvent)

A nonaqueous electrolyte solution includes a lithium salt as an electrolyte and an organic solvent, the lithium salt is represented by, for example, Li⁺X⁻, and an example of an anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and the like.

The organic solvent has sufficient solubility of the lithium salt or the additive, and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethyl sulfoxide, acetonitrile, dimethoxyethane, diethoxyethane, sulfolane, γ-butyrolactone, propylene sulfite, and the like. These may be used alone or in combination of two or more.

### (Additive)

The nonaqueous electrolytic solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds.

The cyclic carbonate-based compound may include vinylene carbonate (VC), vinyl ethylene carbonate (VEC), or the like.

The fluorine-substituted cyclic carbonate-based compound may include fluoroethylene carbonate (FEC) and the like.

The sultone-based compound may include 1,3-propane sultone, 1,3-propene sultone, 1,4-butane sultone, and the like.

The cyclic sulfate-based compound may include 1,2-ethylene sulfate, 1,2-propylene sulfate, and the like.

The cyclic sulfite-based compound may include ethylene sulfite, butylene sulfite, and the like.

The phosphate-based compound may include lithium difluoro bis-oxalato phosphate, lithium difluoro phosphate, and the like.

The borate-based compound may include lithium bis(oxalate) borate and the like.

### [Solid electrolyte]

In some exemplary embodiments, the positive electrode and/or negative electrode may include a solid electrolyte. In this case, the lithium secondary battery may be manufactured in an all-solid-state battery form.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li_{2O}, Li₂S-P₂S₅-Li_{2O}-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, and Z is Ge, Zn, or Ga), Li₂S-GeS₂, Li₂S-SiS₂-Li₃PO₄, Li₂S-SiS₂-LiₚMO_{q}, (p and q are positive numbers, and M is P, Si, Ge, B, Al, Ga, or In), Li₇₋ₓPS₆₋ₓClₓ (0≤x≤2), Li₇₋ₓPS₆₋ₓBrₓ (0≤x≤2), Li₇₋ₓPS₆₋ₓIₓ (0≤x≤2), and the like. These may be used alone or in combination of two or more.

In an exemplary embodiment, the solid electrolyte may include, for example, an oxide-based amorphous solid electrolyte such as Li_{2O}-B₂O₃-P₂O₅, Li_{2O}-SiO₂, Li_{2O}-B₂O₃, and Li_{2O}-B₂O₃-ZnO.

### [Cell structure]

For example, electrode tabs (positive electrode tab and negative electrode tab) may protrude from the positive electrode current collector and the negative electrode current collector and extend to one side of a case, respectively. The electrode tabs may be connected to electrode leads (positive electrode lead and negative electrode lead) which are fused with the one side of the case and extended or exposed to the outside of the case.

For example, a pouch-type case, an angular case, a cylindrical case, a coin-type case, and the like may be used.

Hereinafter, the examples will be further described with reference to the specific experimental examples. It is apparent to those skilled in the art that the examples and the comparative examples included in the experimental examples only illustrate an exemplary embodiment and do not limit the appended claims, and various modifications and alterations of the examples may be made within the range of the scope and spirit of the present disclosure, and these modifications and alterations will fall within the appended claims.

### <Experimental method>

### 1. High temperature shrinkage rate evaluation

The composite electrolyte membrane of Example 1 and the separator of Comparative Example 1 were cut into 4 cm × 5 cm pieces, respectively, a glass plate was placed on and under them, the composite electrolyte membrane of Example 1 was placed in an oven set to 200°C while the separator of Comparative Example 1 was placed in an oven set to 180°C, the membrane/separator was taken out after 1 hour, and the shapes were checked.

### 2. Ion conductivity evaluation

The composite electrolyte membranes of Examples 1 and 2 and the separator of Comparative Example 1 were cut into the thickness of Table 1 (19 pi), a gasket, the cut membrane, a spacer, and a spring were stacked in this order, and a carbonate-based liquid electrolyte (1.1 M LiPF₆ in EC/EMC, FEC 5 wt%) was injected to manufacture a coin cell. Ohmic resistance was measured using electrochemical impedance spectroscopy (EIS) to evaluate ion conductivity (25°C).

### 3. Capacity evaluation

Cycle evaluation was performed under the following charge/discharge conditions, and high rate evaluation was performed with only the discharge rate changed.
* Designed capacity: 166 mAh, 25°C; charge: 0.3 CC-CV; cut off: 4.2 V, 0.05 C; discharge: 0.5 C

### <Example 1>

34 wt% of polyvinylidene fluoride-co-hexafluoropropylene (PVDF-HFP) (melting point: about 150°C), 22 wt% of ethylene carbonate (EC), 10 wt% of LiTFSI(LiN(CF₃SO₂)₂), and 34 wt% of boehmite (y-AlOOH) were dissolved in an organic solvent to prepare a slurry. At this time, a weight ratio between boehmite and PVDF-HFP was 5:5. A release film was coated with the slurry, and then expanded polytetrafluoroethylene (ePTFE) (melting point: about 320°C, thickness: 10 µm) was introduced as a porous support to impregnate the pores of the support with the slurry using capillarity. Thereafter, both surfaces of the porous support were coated with the slurry at a thickness of about 3 µm, dried at room temperature for 1 hour under vacuum conditions, and then dried at 50°C for 4 hours to manufacture a composite electrolyte membrane.

### <Example 2>

A composite electrolyte membrane was manufactured in the same manner as in Example 1, except that the weight ratio between boehmite and PVDF-HFP was changed to 8:2.

### <Comparative Example 1>

A commercially available ceramic coating separator (product of SKIET Co., Ltd.) was prepared. The separator had a coating layer (thickness: about 2 µm) including boehmite (95 wt%) formed on both surfaces of a polyethylene (PE) (melting point: about 140°C, thickness: about 9 µm) substrate.

### <Comparative Example 2>

A composite electrolyte membrane was manufactured in the same manner as in Example 1, except that aluminum oxide (Al₂O₃) including no hydrophilic functional group was used instead of boehmite.

### <Example 3>

An aluminum current collector (thickness: about 12 µm) was coated with a slurry prepared by mixing NCM88 (LiNi_{0.88}Co_{0.09}Mn_{0.03}O₂), polyvinylidene fluoride (PVDF), and carbon nanotubes (CNT) at a weight ratio of 98:1:1, and dried to form a positive electrode mixture layer having a thickness of about 60 µm, thereby manufacturing a positive electrode. A copper current collector (thickness: about 9 µm) was coated with a slurry prepared by mixing graphite, styrene-butadiene rubber (SBR), and CNT at a weight ratio of 95:2:3 and then dried to form a negative electrode mixture layer having a thickness of about 40 µm, thereby manufacturing a negative electrode.

The composite electrolyte membrane of Example 1, the positive electrode, and the negative electrode were stacked to manufacture a jelly roll, which was placed in a pouch, and a gel polymer electrolyte solution was injected to manufacture a pouch type battery. At this time, the electrolytic solution included a liquid electrolyte (1.1 M LiPF₆ in EC/EMC, 5 wt% of FEC) and a gel polymer (trimethylolpropane triacrylate, TMPETA) at a weight ratio of 95:5 and 1 wt% of an initiator, tert-Butyl peroxypivalate (TBPP) of the gel polymer.

### <Example 4>

A pouch type battery was manufactured in the same manner as in Example 3, except that the composite electrolyte membrane of Example 2 was used instead of the composite electrolyte membrane of Example 1.

### <Comparative Example 3>

A pouch type battery was manufactured in the same manner as in Example 3, except that the separator of Comparative Example 1 was used instead of the composite electrolyte membrane of Example 1.

### <Comparative Example 4>

A pouch type battery was manufactured in the same manner as in Example 3, except that the separator of Comparative Example 2 was used instead of the composite electrolyte membrane of Example 1.

### <Experimental Example>

As a result of evaluating the high temperature shrinkage rates of the composite electrolyte membrane of Example 1 and the separator of Comparative Example 1 according to Experimental Method 1 (FIG. 1), it was confirmed that the composite electrolyte membrane of Example 1 did not shrink even at a high temperature of 200°C, but the support of Comparative Example 1 using a conventional polyolefin support shrank.

In addition, as a result of evaluating the ion conductivities of the composite electrolyte membranes of Examples 1 and 2 and the separator of Comparative Example 1 according to Experimental Method 2 (Table 1), the ion conductivity of the composite electrolyte membrane of Example 2 including boehmite and the polymer binder at a ratio of 8:2 was about twice the ion conductivity of the separator of Comparative Example 1 including 95 wt% of boehmite and evaluated to be significantly high, and the composite electrolyte membrane of Example 1 including boehmite and the polymer binder at a ratio of 5:5 also showed high ion conductivity which is similar to the ion conductivity of Comparative Example 1.

**[Table 1]**

| | Thickness (µm) | Ion conductivity (mS/cm) |
|---|---|---|
| Example 1 | 14 | 0.447 |
| Example 2 | 25 | 1.005 |
| Comparative Example 1 | 11 | 0.537 |

As a result of evaluating the capacity to 12 cycles using the pouch cells of Examples 3 and 4 and Comparative Example 3 according to the Experimental Method 3, it was confirmed that Example 3 was about 140 mAh; Example 4 was about 149 mAh; and Comparative Example 3 was about 150 mAh, and as shown in the following Table 2, it was confirmed that the pouch cells according to the examples expressed the capacity equivalent to the capacity of Comparative Example 3 including a commercially available separator at a C-rate of 1.5 or less and progressed cycles.

**[Table 2]**

| | 0.5 C | 1.0 C | 1.5 C |
|---|---|---|---|
| Example 3 | 147.9 mAh | 131.3 mAh | 117.7 mAh |
| Example 4 | 153.9 mAh | 141.2 mAh | 128.1 mAh |
| Comparative Example 3 | 151.3 mAh | 139.8 mAh | 127.6 mAh |

In addition, as a result of measuring the capacity retention rate by measuring the capacity at the first cycle and the 100th cycle using the pouch cells of Examples 3 and 4 and Comparative Examples 3 and 4 (Table 3), it was confirmed that the pouch cells of Examples 3 and 4 including the composite electrolyte membrane manufactured from an oxide including a hydrophilic group had higher capacity retention rates and better cell performance than the pouch cells of Comparative Examples 3 and 4.

**[Table 3]**

| | Capacity retention rate (%) |
|---|---|
| Example 3 | 99.9 |
| Example 4 | 98.6 |
| Comparative Example 3 | 96.2 |
| Comparative Example 4 | 93.3 |

The present disclosure relates to a composite electrolyte membrane in which a coating layer including a lithium salt, a polymer binder, and hydrophilic oxide particles is formed on a high heat resistant porous support having a melting point of 145°C or higher. An exemplary embodiment may implement high temperature stability and high ion conductivity simultaneously, by applying the high heat resistant porous support and hydrophilic oxide particles to an organic/inorganic composite electrolyte membrane.

The above description is only an example to which the principle of the present disclosure is applied, and other constitutions may be further included without departing from the scope of the present disclosure. Hereinabove, though an implementation example has been described in detail by the examples and the experimental examples, the scope of an implementation example is not limited to specific examples and should be construed by the appended claims.

## Claims

1. A composite electrolyte membrane comprising:
a porous support including a polymer having a melting point of 145°C or higher; and
a coating layer on at least one side of the porous support,
wherein the coating layer includes a polymer binder and hydrophilic oxide particles.

2. The composite electrolyte membrane of claim 1, wherein the porous support includes a polymer selected from the group consisting of a fluorine-based polymer, a sulfone-based polymer, a hydrocarbon-based polymer, polyimide (PI), polyethylene terephthalate (PET), polybenzimidazole (PBI), aramid, and copolymers thereof, as the polymer having a melting point of 145°C or higher, in particular, the porous support includes a polymer selected from the group consisting of polytetrafluoroethylene (PTFE), polyvinylidene fluoride (PVDF), polyvinylidene fluoride-co-hexafluoropropylene (PVDF-HFP), polysulfone (PS), polyimide (PI), polyethylene terephthalate (PET), polybenzimidazole (PBI), aramid, and copolymers thereof.

3. The composite electrolyte membrane of claim 1 or 2, wherein the hydrophilic oxide particles are inorganic oxide particles including any one or more hydrophilic groups selected from the group consisting of -OH, -C(=O), -COO, and -CONH.

4. The composite electrolyte membrane of any one of claims 1 to 3, wherein the hydrophilic oxide particles include boehmite or include TiO₂, SnO₂, CaO, ZnO, ZrO₂, CeO₂, NiO, MgO, SiO₂, BaTiO₃, HfO₂, SrTiO₃, Y₂O₃, or Al₂O₃ including one or more hydrophilic groups selected from the group consisting of -OH, -C(=O), -COO, and -CONH on a surface.

5. The composite electrolyte membrane of any one of claims 1 to 4, wherein the polymer binder includes any one or more selected from the group consisting of a fluorine-based polymer, a sulfone-based polymer, a hydrocarbon-based polymer, a urethane-based polymer, an ester-based polymer, an epoxy-based polymer, an amide-based polymer, an imide-based polymer, an acryl-based polymer, an acrylamide-based polymer, a vinyl alcohol-based polymer, an aramid-based polymer, a vinylpyrrolidone-based polymer, and synthetic rubber in particular, the polymer binder includes a polymer selected from the group consisting of polyethylene oxide (PEO), polyurethane (PU), polyacrylonitrile (PAN), polymethylmethacrylate (PMMA), styrene-butadiene rubber (SBR), polyvinylidene fluoride (PVDF), polyvinylidene fluoride-co-hexafluoropropylene (PVDF-co-HFP), and copolymers thereof.

6. The composite electrolyte membrane of any one of claims 1 to 5, wherein the porous support and the polymer binder include a fluorine-based polymer.

7. The composite electrolyte membrane of any one of claims 1 to 6, wherein a weight ratio between the polymer binder and the hydrophilic oxide particles is 1:99 to 99:1.

8. The composite electrolyte membrane of any one of claims 1 to 7, wherein the coating layer further includes a plasticizer.

9. The composite electrolyte membrane of any one of claims 1 to 8, wherein the coating layer is applied on the porous support, or applied on the porous support and impregnated into the pores of the porous support.

10. The composite electrolyte membrane of any one of claims 1 to 9, wherein the porous support has a porosity of 30% to 90%.

11. The composite electrolyte membrane of any one of claims 1 to 10, wherein the coating layer has a thickness of 1 µm to 20 µm.

12. The composite electrolyte membrane of any one of claims 1 to 11, wherein the porous substrate has a thickness of 1 µm to 50 µm.

13. A method for manufacturing a composite electrolyte membrane, the method comprising: a coating process of coating at least one side of a porous support including a polymer having a melting point of 145°C or higher with a slurry including a lithium salt, a polymer binder, and hydrophilic oxide particles.

14. The method for manufacturing a composite electrolyte membrane of claim 13, further comprising: before the coating process, an impregnation process of impregnating the porous support with the slurry.

15. An electrochemical device comprising a positive electrode, a negative electrode, and the composite electrolyte membrane of any one of claims 1 to 12.
